# FASCICULE DE BREVET EUROPEEN

(11) **EP 2 061 194 B1**
(45) Date de publication et mention de la délivrance du brevet: **21.01.2015**
(21) Numéro de dépôt: 08291048.0
(22) Date de dépôt: 07.11.2008
(51) Int. Cl.: H04W 28/00, H04W 92/02, H04W 88/16, H04L 12/24

(54) **Procédé et système de gestion de communication**
Verfahren und System zur Kommunikationsverwaltung
Method and system for managing communication

(30) Priorité: 15.11.2007 FR 0708018
(43) Date de publication de la demande: 20.05.2009
(73) Titulaire: Société Française du Radiotéléphone, 75008 Paris (FR)
(72) Inventeur: Daurensan, Benoit, 92160 Antony (FR); Thery, Bernard, 78170 La Celle St Cloud (FR); Vincent, François, 92140 Clamart (FR)
(74) Mandataire: Debay, Yves

(56) Documents cités:
- WO-A-02/05886
- US-B1- 7 072 961

## Description

Le domaine de la présente invention est celui des télécommunications. Plus particulièrement, il s'agit d'un procédé et d'un système de mise à disposition d'accès à un réseau haut débit, comme par exemple le réseau Internet, depuis un réseau avec des capacités de débit moindres, comme par exemple un réseau de télécommunication par ondes radiofréquences. An example can be found in US7072961.

Un réseau de télécommunication par ondes radiofréquences permet d'accéder à Internet, par des passerelles auxquelles se connectent les terminaux mobiles. Le réseau de télécommunication par ondes radiofréquences s'appuie en particulier sur des ressources matérielles supportant des débits de données très inférieurs aux débits sur des réseaux fixes utilisant des lignes optiques ou électriques, comme par exemple un réseau à haut débit de type ADSL (Asymmetric Digital Subscriber Line) utilisé pour le réseau Internet. Les connexions à Internet, depuis un réseau de télécommunication par ondes radiofréquences, sont donc limitées en nombre, en débit ou en durée, pour ne pas saturer le réseau de télécommunication par ondes radiofréquences. Ces accès ne sont donc pas adaptés pour des offres grand public.

Il existe ainsi un besoin d'avoir des accès à Internet depuis un réseau de télécommunication par ondes radiofréquences, ces accès étant potentiellement illimités afin d'être adaptés à des offres grand public.

La présente invention a pour objet de supprimer un ou plusieurs des inconvénients de l'art antérieur en proposant un procédé de gestion des communications permettant des accès par le grand public au réseau Internet en utilisant un réseau de télécommunication par ondes radiofréquences.

Cet objectif est atteint grâce à un procédé de gestion des communications de terminaux mobiles dans un premier réseau de communication par ondes radiofréquences géré par un opérateur et un second réseau, reliés entre eux par une passerelle comprenant une pluralité de ports de communication entre les premier et second réseaux, le premier réseau étant équipé d'organes de contrôle produisant :
- des paramètres relatifs aux communications établies avec les terminaux mobiles, comprenant chacun au moins un identifiant de l'utilisateur du terminal mobile en communication et un identifiant du type de communication, ou
- des paramètres relatifs aux échecs de connexions, comprenant chacun au moins un identifiant du type de connexion ayant échoué et un identifiant du type d'utilisateur du terminal mobile concerné, ou
- des paramètres relatifs à l'occupation des ressources des différents éléments du premier réseau, et notamment de chacun des ports de la passerelle entre le premier et le second réseau,
caractérisé en ce qu'il comprend au moins :
- une étape de collecte des paramètres produits par les organes de contrôle,
- une étape de traitement des paramètres collectés pour régler au moins un indicateur de saturation,
- une étape de test dudit indicateur, résultant d'une commande de capacité de transmission d'au moins un port dédié aux accès de type offre grand public, parmi lesdits ports de la passerelle.

Selon une autre particularité, l'étape de test indiquant une saturation du premier réseau, est suivie d'une étape de détermination du type de saturation comprenant une analyse des paramètres collectés ou des indicateurs réglés et comprenant une évaluation des communications du type accès au second réseau par les utilisateurs de terminaux bénéficiant d'offres grand public.

Selon une autre particularité, l'étape de détermination du type de saturation comprend un accès à une base de données comprenant au moins un type d'offre souscrite associé à chaque identifiant d'utilisateur, de façon à faire correspondre chaque communication et chaque échec de connexion, avec le type d'offre souscrite par l'utilisateur.

Selon une autre particularité, durant l'étape de détermination du type de saturation, les communications, ou respectivement les échecs de connexion, du type accès au second réseau par des utilisateurs de terminaux bénéficiant d'offres grand public, sont déterminées par leur identifiant du type de communication, ou respectivement d'échec de connexion, qui comprend l'adresse du port dédié aux accès de type offre grand public.

Selon une autre particularité, l'étape de détermination du type de saturation résultant d'une saturation par des communications du type accès au second réseau par des utilisateurs bénéficiant d'une offre grand public, aux dépens d'autres types de connexions, est suivie d'une étape de commande de réduction de la capacité de transmission du port dédié aux accès de type offre grand public vers le second réseau et

l'étape de détermination du type de saturation ne résultant pas d'une saturation par des communications du type accès au second réseau par des utilisateurs bénéficiant d'une offre grand public, est suivie d'une étape de signification de ressources matérielles insuffisantes dans le premier réseau, à un dispositif d'évaluation des ressources matérielles.

Selon une autre particularité, l'étape de test indiquant une non-saturation du premier réseau, est suivie d'une étape de commande d'augmentation de la capacité de transmission du port dédié aux accès de type offre grand public vers le second réseau.

Selon une autre particularité, le procédé de gestion des communications comprend une étape d'activation d'une fonction de gestion des priorités sur le port dédié aux accès de type offre grand public, donnant la priorité aux communications de type navigation interactive en ligne par rapport aux communications du type téléchargement.

Un autre objet de la présente invention est de proposer un système de communication permettant des accès par le grand public au réseau Internet en utilisant un réseau de télécommunication par ondes radiofréquences.

Cet objectif est atteint grâce à un système de communication comprenant des terminaux mobiles dans un premier réseau de communication par ondes radiofréquences géré par un opérateur, le premier réseau communiquant avec un second réseau par une passerelle équipée d'une pluralité de ports de communication entre les premier et second réseaux, le premier réseau étant équipé d'organes de contrôle produisant :
- des paramètres relatifs aux communications établies avec les terminaux mobiles, comprenant chacun au moins un identifiant de l'utilisateur du terminal mobile en communication et un identifiant du type de communication, ou
- des paramètres relatifs aux échecs de connexions, comprenant chacun au moins un identifiant du type de connexion ayant échouée et un identifiant de l'utilisateur du terminal mobile concerné, ou
- des paramètres relatifs à l'occupation des ressources des différents éléments du premier réseau, et notamment de chacun des ports de la passerelle entre le premier et le second réseau,
caractérisé en ce qu'il comprend au moins une ligne de commande d'un port de la passerelle pilotée par un dispositif de gestion des éléments de réseau, le port commandé étant dédié aux accès de type offre grand public,
le dispositif de commande comprenant :
- un module de collecte des paramètres,
- un module de traitement des paramètres collectés, réglant au moins un indicateur de saturation,
- un module de commande, réglant la capacité de transfert du port dédié aux accès de type offre grand public, en fonction de l'indicateur de saturation, de façon à ne pas encombrer le premier réseau ou de façon à exploiter la bande passante disponible du premier réseau.

Selon une autre particularité, le second réseau est le réseau Internet, les utilisateurs grand public établissant des communications Internet étant identifiables dans le premier réseau au travers d'un marquage particulier des en-têtes encapsulant les informations transférées par les utilisateurs.

Selon une autre particularité, la passerelle, par exemple, du type GGSN (Gateway GPRS Support Node), ou encore constituée d'un serveur indépendant qui sera située entre le GGSN du premier réseau et le second réseau, active une fonction de priorité sur son port dédié aux accès de type offre grand public, donnant la priorité aux communications de type navigation interactive en ligne par rapport aux communications du type téléchargement.

Selon une autre particularité, les organes de contrôle sont intégrés à des noeuds de communication du premier réseau ou sont réalisés par des sondes de contrôle intégrées dans le premier réseau.

L'invention, ses caractéristiques et ses avantages apparaîtront plus clairement à la lecture de la description faite en référence aux figures référencées ci-dessous et données à titre d'exemples non limitatifs :
- la figure 1 représente un exemple de procédé de gestion des communications selon l'invention;
- la figure 2 représente un exemple de dispositif de gestion des communications selon l'invention ;

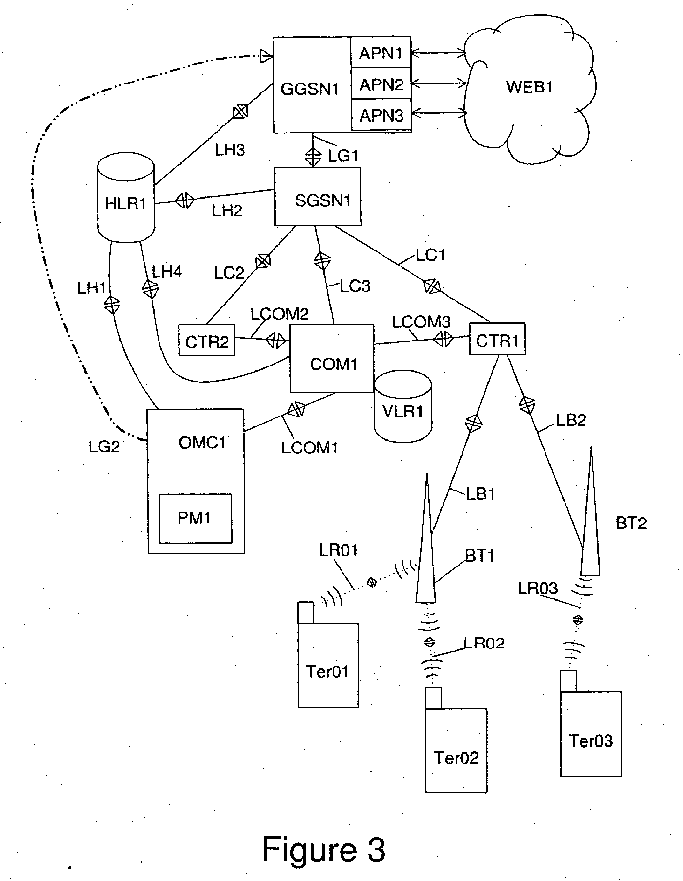

- la figure 3 représente un exemple de système à deux réseaux de communication selon l'invention.

L'invention va à présent être décrite en référence aux figures précédemment citées. Un réseau de communication par ondes radiofréquences, comme par exemple un réseau de téléphonie cellulaire, comprend par exemple, un terminal (Ter01, Ter02, Ter03) mobile qui établit une communication, via une passerelle (GGSN1), avec un réseau à haut débit (WEB1), comme par exemple le réseau Internet. La passerelle (GGSN1) est équipée de plusieurs ports (APN1, APN2, APN3) ou points d'accès, également désignés par «Access Point Name » en anglais. Le réseau de communication par ondes radiofréquences comprend, par exemple, des composants du type GSM (Global System for Mobile Communications), UMTS (Universal Mobile Telecommunications System), GPRS (General Packet Radio Service), ou encore HSDPA (High Speed Downlink packet Access).

Le terminal (Ter01, Ter02, Ter03) mobile est, par exemple, relié au réseau de communication par ondes radiofréquences, en établissant une liaison radio (LR01, LR02, LR03) de communication avec une station (BT1, BT2) de transmission. Les stations (BT1, BT2) de transmission sont, par exemple, des stations de type BTS (Base Transceiver Station) pour le réseau GSM/GPRS ou des stations de type Node B pour le réseau UMTS/HSDPA.

Ces stations (BT1, BT2) de transmission sont gérées, par exemple, par des contrôleurs (CTR1, CTR2) qui commandent, généralement chacun plusieurs stations (BT1, BT2) de transmission. Le contrôleur (CTR1, CTR2) est relié par des lignes (LB1, LB2) de communication électriques ou optiques, avec les stations (BT1, BT2) de transmission contrôlées par ce contrôleur. Un contrôleur (CTR1, CTR2) est, par exemple, un contrôleur du type BSC (Base Station Controller) pour le réseau GSM, ou un contrôleur du type RNC (Radio Network Controller) pour le réseau UMTS.

Les contrôleurs (CTR1, CTR2) sont par exemple reliés d'autre part avec un dispositif (SGSN1) d'interface avec une passerelle (GGSN1) d'accès à Internet. La passerelle est, par exemple, associée à un dispositif routeur pour l'acheminement des communications. Le dispositif d'interface est par exemple du type SGSN (Serving GPRS Support Node), associé à une passerelle du type GGSN (Gateway GPRS Support Node). Le dispositif (SGSN1) d'interface communique, par exemple, par une liaison (LH2), avec une base (HLR1) de données de gestion des communications, comprenant par exemple pour chaque abonné, l'identité internationale de l'abonné sous la forme de son code IMSI (International Mobile Subscriber Identifier), son numéro d'abonné et la ou les offres de services souscrites auprès de son opérateur de télécommunication. La base (HLR1) de données pour la gestion des communications est par exemple du type HLR (Home Location Register). Le dispositif (SGSN1) d'interface gère, par exemple, le transfert des paquets entre un terminal mobile et la passerelle d'accès à Internet.

De manière non limitative, un contrôleur du type RNC est relié, par une liaison (LC1, LC2) de communication, au dispositif (SGSN1) d'interface ou un contrôleur du type BSC, équipé d'un module communication par paquets de type PCU (Packet Control Unit) est relié, par une liaison (LC1, LC2) de communication, au dispositif (SGSN1) d'interface.

De manière non limitative, une communication entre un contrôleur et le composant d'interface de la passerelle peut être établie via un ou plusieurs composants intermédiaires de communication. Un contrôleur (CTR1, CTR2) par exemple du type BSC établit, par exemple une communication avec le composant (SGSN1) d'interface avec la passerelle, via un routeur. Le composant routeur est relié d'une part avec le contrôleur (CTR2, CTR1) par une liaison (LCOM2, LCOM3) et d'autre part, une autre liaison (LC3) relie le routeur (COM1) au dispositif (SGSN1) d'interface avec la passerelle.

La passerelle (GGSN1) est par exemple reliée par une liaison (LG1) de communication, avec le dispositif (SGSN1) d'interface et par une autre liaison (LH3) de communication avec la base (HLR1) de données de gestion des communications. La passerelle, par exemple du type GGSN, est ainsi utilisée comme interface entre un réseau mobile d'un opérateur et le réseau (WEB1) Internet public ou d'autres réseaux à haut débit.

Un routeur (COM1), est par exemple relié par des liaisons (LCOM1, LCOM2) avec les contrôleurs (CTR1, CTR2). Le routeur (COM1) est par exemple aussi relié par une autre liaison (LH4) de communication, avec la base (HLR1) de données de gestion des communications, par une autre liaison (LC3) de communication avec le dispositif (SGSN1) d'interface et par une autre liaison (LCOM1) de communication avec un dispositif (OMC1) de gestion.

Les noeuds de communication, comme par exemple, les stations (BT1, BT2) de transmission, les contrôleurs (CTR1, CTR2) ou les routeurs (COM1), reliés entre eux par des lignes de communication, permettent de transmettre plusieurs types de données, selon un ou plusieurs types de protocole de transmission de données. Les données transportées sont par exemple des données représentatives de la voix, de messages de texte, de messages multimédia, de données de gestion ou d'autres types de données. Un réseau d'administration est, par exemple, ajouté au réseau de communication. Le réseau d'administration comprend, par exemple, des lignes d'administration reliant des noeuds de communication du réseau avec le dispositif de gestion. Ces lignes de communication du réseau d'administration sont par exemple disposées en parallèle des lignes entre les noeuds de communication et sont par exemple dédiées à la transmission de données utilisées pour la gestion du réseau.

Le réseau de communication par ondes radiofréquences, est par exemple utilisé pour les communications téléphoniques ou pour la transmission des messages texte de type SMS. Un utilisateur d'un terminal mobile peut aussi établir une communication avec un terminal d'un autre réseau, comme par exemple le réseau Internet, les données transmises correspondant, par exemple, à des pages Internet du type HTML (Hypertext Markup Language) ou des fichiers de programme ou multimédia d'un site FTP (File Transfert Protocol). Différents abonnements sont par exemple proposés à un utilisateur pour bénéficier de différents services d'accès.

La souscription à un abonnement est associée à une qualité de service proposée au client. La qualité de service concerne notamment le transfert de données, dans de bonnes conditions. La qualité de service est fonction, par exemple de la disponibilité des noeuds du réseau ou des débits utilisés par rapport aux capacités de transfert disponibles. La qualité de service se rapporte aussi, par exemple, aux délais de transit ou aux taux de perte de données ou de paquets de données. Le taux d'échec de connexions, dans une zone géographique couverte par une ou plusieurs stations de transmission et pour une période déterminée, est, par exemple, représentatif d'une qualité de service pour cette zone géographique durant cette période.

L'estimation de la qualité de service sur un réseau, permet, par exemple d'estimer si les ressources matérielles du réseau sont suffisantes. Ainsi d'une part, les ressources matérielles du réseau sont optimisées et d'autre part, des performances pour différentes applications peuvent être garanties aux clients. Une accessibilité, un temps de réponse ou un taux de réussite d'établissement d'une connexion peuvent ainsi être proposés au client selon une qualité de service déterminée.

Une qualité de service différenciée est par exemple réalisée pour des accès Internet. Un premier type d'accès à Internet sera, par exemple, garanti selon une très bonne qualité pour des usages de type professionnel. La garantie d'accès correspond par exemple à un taux d'échec de connexion maximum déterminé, par exemple de 2%. Un utilisateur professionnel utilisera l'accès vers d'autres réseaux, par exemple pour accéder à sa base de données ou recevoir son courrier électronique.

Un second type d'accès à Internet sera, par exemple, garanti selon une qualité moyenne pour des usages de type grand public. Ces accès pour le grand public sont par exemple des accès de type « best effort ». L'accès dit « best effort » correspond par exemple à une mise à disposition de la bande passante non utilisée dans le réseau de communication par ondes radiofréquences. Un utilisateur particulier ou grand public, utilisera, par exemple, Internet pour des téléchargements de fichiers multimédia ou des programmes ou pilotes informatiques ou pour la navigation sur des pages d'information, également appelé « web browsing ».

Les noeuds de communication ou des sondes de mesure disposées dans le réseau de communication par ondes radiofréquences, transmettent par exemple, des données représentatives de l'état de fonctionnement du réseau. Ces données sont transmises, par exemple, via les noeuds de communication ou en utilisant le réseau d'administration. De manière non limitative, ces données transmises sont, par exemple, des paramètres tels que :
- le taux d'utilisation d'une ligne ou d'un noeud de communication par rapport à sa capacité de transfert maximum,
- le nombre d'utilisateurs générant les communications au point mesuré dans le réseau, les types d'utilisateurs et les types de communications,
- le taux d'échec de connexion, les types de connexions ayant échouées et les types d'utilisateurs associés.
   Les informations ci-dessus seront collectées à différents niveaux dans le premier réseau, :

- un premier niveau de collecte sera par exemple constitué de chacune des stations de base radio (BT1, BT2, ...).,
- un second niveau de collecte sera par exemple constitué des contrôleurs (CTR1,CTR2, ..) de stations de base,
- un troisième niveau sera par exemple constitué au niveau des SGSN,
- un quatrième niveau sera par exemple constitué au niveau des GGSN,

Les informations transmises par les organes de contrôle, tels que les noeuds de communication ou les sondes, sont par exemple, croisées entre elles ou avec des informations d'une ou plusieurs bases (VLR1, HLR1) de données. Le traitement des informations est réalisé par le dispositif (OMC1) de gestion qui réalise, par exemple, une collecte et un stockage des données rangées, par exemple dans un fichier ou une base (BD1) de données de paramètres du réseau. Les champs de la base de données de paramètres du réseau sont, par exemple :
- un identifiant de l'organe de contrôle produisant ce paramètre,
- un nom du paramètre mesuré ou calculé,
- une ou plusieurs valeurs correspondant à l'état du paramètre.

Cette première base de données, ou table, sera réactualisée périodiquement. La durée entre deux actualisations sera calculée en fonction des capacités opérationnelles des différents noeuds et lignes concernés. Une actualisation plusieurs fois par heure est nécessaire au bon fonctionnement du dispositif.

En complément à cette première table, le dispositif de gestion (OMC1) dispose d'une table décrivant la hiérarchie de connexion des noeuds de réseau les uns aux autres, et notamment le rattachement des stations de base radio aux contrôleurs et celui des contrôleurs aux SGSN.

De manière non limitative, le dispositif de gestion, par exemple du type OMC (Operation and Maintenance Center), est associé à un calculateur (PM1) réalisant, par exemple des lectures des paramètres et réglant des indicateurs calculés selon des méthodes déterminées. Le calculateur réalise, par exemple, des traitements de données à partir des paramètres de réseau collectés, pour déterminer des indices représentatifs de l'état ou des performances du réseau.

Le dispositif de gestion permet par exemple d'évaluer le pourcentage des stations de base radio pour lesquelles les critères de qualité (le taux d'échec de connexion, les types de connexions ayant échouées) dépasse le seuil fixé. Il permet également par exemple d'évaluer le pourcentage d'échec de connexion des types d'utilisateurs professionnels sur l'ensemble du réseau. Une multitude de critères de décision peut ainsi être élaborée selon la nature des garanties de qualité de service que l'opérateur de réseau souhaitera offrir à certains types d'utilisateurs prioritaires.

Le dispositif de gestion permet, par exemple, d'évaluer les besoins matériels correspondant, par exemple, aux débits autorisés dans le réseau. Ainsi l'architecture matérielle du réseau peut être améliorée pour correspondre aux besoins, c'est-à-dire aux services proposés à l'utilisateur. Ces besoins correspondent en effet à des services garantis. La connexion sera établie avec un débit ou une qualité de transfert garantie, un seuil d'erreur étant, par exemple, toléré. Les erreurs correspondent, par exemple, à un échec de connexion ou à une communication dégradée avec pertes de données. Ainsi une marge, concernant par exemple les calculs de débit sur les lignes de communication ou les calculs de débits aux noeuds de communication, est nécessaire pour garantir une qualité de service respectant le seuil d'erreur. Le dimensionnement du réseau est par exemple, prévu pour une fréquentation maximale à des périodes déterminées où ces services garantis sont assurés.

De plus, pour remplir le réseau au maximum de ses capacités, l'offre de remplissage dite « best effort » permet d'utiliser la bande passante disponible en tout point du réseau en dehors des périodes de fréquentation maximale et permet ainsi de rentabiliser le réseau.

De plus ce type d'offre de remplissage peut être utilisée pour des offres d'accès dites grand public, avec un accès à Internet potentiellement illimité. En effet une utilisation d'Internet pour le grand public nécessite de pouvoir offrir un grand nombre de connexions pouvant nécessiter des débits importants. Grâce à la gestion de ces connexions, une offre de connexion à Internet grand public peut être proposée sans saturation de la bande passante du réseau qui aurait pour effet de dégrader les services disponibles en permanence.

La collecte des paramètres de réseau, par exemple réalisée à intervalles de temps réguliers, permet de déterminer si la bande passante du réseau est saturée ou si la bande passante est encore en partie disponible. Si le réseau est beaucoup sollicité, c'est-à-dire que sa bande passante est complètement exploitée, le dispositif (OMC1) de gestion ou son calculateur (PM1) associé, envoie par exemple, à la passerelle (GGSN1) d'accès à Internet, une commande de diminution du débit d'un port (APN1) d'accès à Internet associé à l'offre de remplissage « best effort ». Ainsi le flux de données correspondant aux services de remplissage, est diminué pour alléger le réseau de communication par ondes radiofréquences. Les terminaux souscrivant à ce type d'offre de remplissage, correspondant par exemple aux offres grand public, sont en effet associés à un port déterminé de la passerelle d'accès à Internet. Ce port est notamment dédié aux accès Internet par une offre dite « best effort » ou de remplissage ou grand public.

Les terminaux associés à une offre de service de type professionnelle, sont par exemple associés à un autre port (APN3) d'accès à Internet de la passerelle (GGSN1). Ainsi la diminution du débit sur le port (APN1) d'accès à Internet de type offre de remplissage, n'affecte pas le débit de données pour des offres professionnelles. Cette diminution qui libère une partie de la bande passante, permet même un meilleur fonctionnement du port (APN3) d'accès à Internet pour les offres de services pour les professionnels. De même la bande passante libérée permet un meilleur fonctionnement pour les autres services du réseau de communication par ondes radiofréquences, tels que le transport de la voix, le transport de messages texte ou d'accès à des portails multimédia proposés par un opérateur. Les offres de service proposées par l'opérateur sont par exemple, déterminées par les données stockées dans la carte SIM du terminal mobile ou dans la base HLR ou VLR du réseau.

II est à noter que le dispositif ainsi décrit permet d'optimiser le remplissage du réseau de communication par ondes radiofréquences même si ce dernier est dépourvu de dispositifs intrinsèques permettant une différenciation de la qualité de service par client ou par nature de service de bout en bout.

La commande du port dédié aux offres grand public, est, par exemple, transmise par les lignes de communication existantes du réseau d'administration et adressée à la passerelle (GGSN1). Le dispositif (SGSN1) d'interface de la passerelle achemine par exemple un nombre déterminé de messages, sous la forme de requêtes ou de réponses à des requêtes, et refuse par exemple, un nombre déterminé de messages provenant des terminaux mobiles qui reçoivent alors une notification d'erreur ou d'échec de la connexion. D'autre part la passerelle (GGSN1) transmet un nombre déterminé de messages entre des terminaux du réseau Internet et des terminaux mobiles et refuse les autres communications en renvoyant, par exemple, aux terminaux du réseau Internet, une notification d'erreur ou d'échec de la connexion.

Dans le cas où la bande passante du réseau n'est pas complètement exploitée, le dispositif de gestion envoie, par exemple, à la passerelle (GGSN1), une commande d'augmentation du débit des données par le port (APN1) d'accès à Internet dédié aux offres de remplissage. De manière non limitative, l'augmentation est calculée en fonction de la bande passante disponible de façon à exploiter entièrement le réseau. Ainsi lors des périodes de faible fréquentation du réseau de communication par ondes radio fréquence, une large bande passante est laissée pour les offres de connexion au réseau Internet grand public. Un utilisateur ayant une offre d'accès à Internet dite « best effort », laissera par exemple sa connexion Internet active pendant toute une journée afin de télécharger un programme ou un fichier informatique de taille importante. Le transfert du ou des fichiers souhaités sera par exemple réalisé avec une ou plusieurs interruptions, les transferts de données étant réalisés durant les périodes où le réseau de communication par ondes radiofréquences est peu occupé par des communications avec une qualité de service constante garantie. Ainsi les utilisateurs ayant des qualités de service constantes garanties ne sont pas perturbés tandis que l'utilisateur ayant une offre dite « best effort » peut télécharger des fichiers importants.

Ainsi les débits des communications Internet par offre de remplissage, sont diminués ou augmentés selon la bande passante disponible du réseau. De plus, la prise en compte d'une saturation par des communications Internet par offre de remplissage, est réalisée par identification de ces demandes de connexions spécifiques. L'identification des messages de type « best effort » est par exemple réalisée selon le port (APN1) adressé dans la passerelle (GGSN1) d'accès à Internet ou un utilisateur est identifié, par exemple par son IMSI, permettant de déterminer son type d'abonnement, par croisement des informations provenant de la base (HLR1) de données de gestion de communication. Le dispositif de gestion peut ainsi déterminer qu'une saturation n'est pas due aux connexions Internet de remplissage, le nombre ou le volume de ces connexions étant par exemple négligeable. Auquel cas le dispositif de gestion détermine que la saturation du réseau est due à une insuffisance des ressources matérielles du réseau de communication. Ainsi le dispositif de gestion du réseau réalise une analyse des besoins en ressources matérielles en même temps qu'une régulation des connexions de remplissage.

De manière non limitative, le port dédié aux connexions à capacité de transfert variable, est associé à une fonction de priorité qui autorise d'abord des communications interactives, de type navigation Internet, puis autorise des communications d'arrière-plan, comme par exemple des téléchargements provenant de sites FTP (File Transfert Protocol). La fonction de priorité est par exemple, basée sur une reconnaissance de signature des protocoles applicatifs de transfert de données, permettant ainsi à la passerelle de contrôler le processus de priorisation. De cette façon, dans l'ensemble des communications pour des accès Internet grand public, certaines communications sont favorisées par rapport à d'autres. L'accès à des pages Internet, par exemple de type HTML, lors d'une navigation sur Internet, nécessite en effet de la rapidité pour procurer de l'interactivité. Les pages Internet sont en effet peu volumineuses en comparaison de fichiers audio ou vidéo téléchargés depuis des sites FTP. Le transfert d'un fichier multimédia peut ainsi être interrompu à la faveur d'une navigation en ligne.

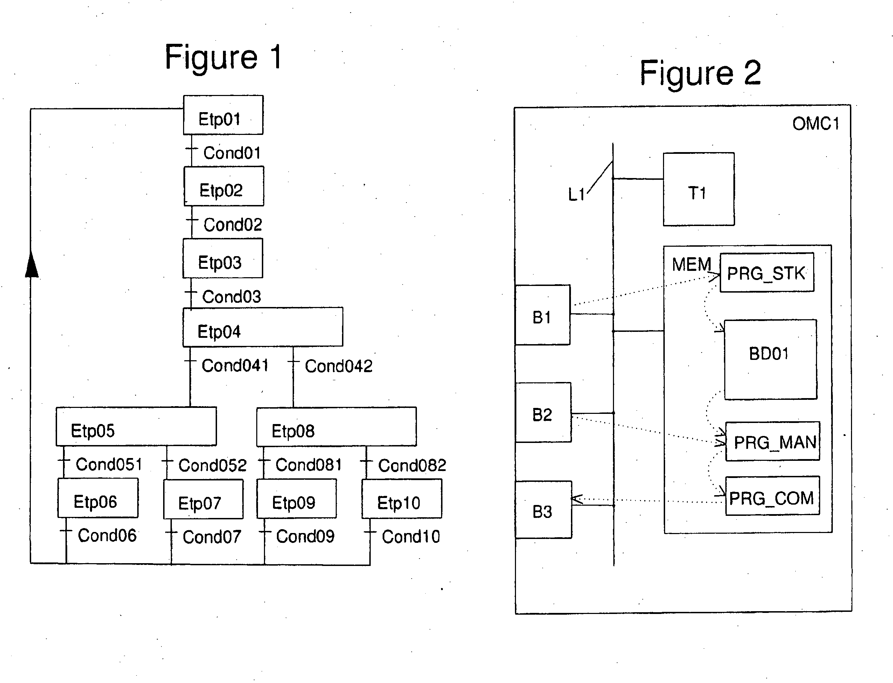

Le dispositif de gestion des communications, comme représenté à la figure 2, comprend de manière non limitative, un composant (T1) de traitement communiquant par une ligne (L1) de communication avec un composant (MEM) de mémorisation et avec des interfaces (B1, B2, B3) de communication avec des ports d'entrée et de sortie. De manière non limitative, le dispositif (OMC1) de gestion est composé d'un module multifonction communiquant par ses ports de communication avec d'autres composants du réseau ou le dispositif (OMC1) de gestion des communications comprend plusieurs unités interagissant entre elles, des fonctions d'analyse, de stockage ou de commande étant par exemple réalisées par des unités spécifiques distinctes.

Un exemple de procédé, exécuté par le dispositif de gestion des communications dans le réseau de communication par ondes radiofréquences, va maintenant être décrit. Le procédé est, par exemple, basé sur plusieurs programmes ou modules interagissant entre eux et activés selon des changements de conditions environnementales ou s'appelant entre eux. Une étape (Etp01) de collecte des paramètres est, par exemple, réalisée par un module (PRG_STK) de collecte et de stockage des paramètres du réseau. Ce module comprend, par exemple, un programme résidant en mémoire (MEM). Le programme collecte par exemple les données adressées sur son port (B1) de communication, ces données étant par exemple stockées dans une mémoire tampon du module (PRG_STK) de collecte et de stockage. Les données ainsi collectées proviennent par exemple de noeuds du réseau de communication ou de sondes ou d'autres organes de contrôle disposés dans le réseau. De manière non limitative les organes de contrôle du réseau envoient par exemple des données de façon périodique, comme par exemple chaque 15 minutes. De manière non limitative, les envois par les différents organes sont réalisés de façon synchrone ou asynchrone.

Après la réception (Cond01) d'un ensemble de données représentatives de paramètres fonctionnels du réseau, le module (PRG_STK) de collecte et de stockage réalise par exemple une étape de classement et de stockage dans une base (BD01) de données comprenant des champs déterminés réglés, par exemple, en fonction des paramètres reçus. L'ensemble des paramètres reçus est, par exemple, disposé dans cette base (BD1) de données. L'exécution du programme de collecte et de stockage provoque par exemple des accès d'écriture en mémoire, dans la base (BD01) de données. De manière non limitative, la mémoire tampon est ensuite vidée pour la réception de nouvelles données représentatives d'autres paramètres du réseau.

Après le classement des paramètres reçus, stockés (Cond02) dans la base de données, une étape (Etp03) de traitement des données est par exemple, exécutée par un module (PRG_MAN) de traitement des données et de réglage d'indicateurs. Le module de traitement comprend, par exemple différents indicateurs réglables.

De manière non limitative, le module (PRG_MAN) de traitement comprend un ou plusieurs programmes de traitement réalisant des traitements croisés sur les données stockées, par exemple dans la base de données des paramètres collectés ou dans une autre base de données, comme par exemple, la base de données décrivant l'architecture du réseau de communication radiofréquence. De manière non limitative, les programmes de traitement réalisent des opérations de comparaison par rapport à des seuils pour déterminer si le réseau est saturé ou si la bande passante est occupée au maximum ou en-dessous de ses capacités. Les programmes de traitement réalisent, par exemple, des calculs de moyennes ou des calculs statistiques sur plusieurs paramètres équivalents.

Les traitements effectués impliquent notamment le réglage d'indicateurs représentatifs de l'état de fonctionnement du réseau.

Un premier type de traitement concernera par exemple le calcul du pourcentage de station de base pour lesquelles le taux d'échec à l'ouverture de transactions de données dépasse un seuil fixé. Cet indicateur permet un premier niveau de contrôle du flux sur le port dédié aux abonnés « best effort » lors d'une saturation des points d'accès localisée dans l'espace sur quelques points particulier du réseau.

Un second type de traitement concernera par exemple le calcul du pourcentage global d'échec d'activation de session de transmission de données dans le réseau. Ce traitement permet l'ajustement du débit autorisé sur le port dédié aux utilisateurs de type « best effort » dés que le niveau garanti aux abonnés professionnel n'est plus assuré (ou juste avant selon la préférence de l'opérateur et les engagements pris vis-à-vis de ses clients)

Un troisième type de traitement consistera par exemple à ajuster ou à fermer le port des utilisateurs de type « best effort » dés lors que les capacités en terme de nombre d'abonnés connectés sur certains noeuds réseau comme les SGSN ou quand le nombre de connexions simultanées sur les GGSN excèdent les capacités desdits équipements, ceci afin de servir en priorité les abonnés des autres types.

Il doit être entendu que les traitements ci-dessus ne sont pas limitatifs des capacités du dispositif qui seront ajustées pour satisfaire les engagements de qualité de service pris par l'opérateur auprès de ses clients des types différents de « best effort » notamment professionnels.

Après le réglage d'un ou plusieurs indicateurs (Con03) une étape suivante de tests des indicateurs est par exemple exécutée par un module (PRG_COM) de commande. En fonction des indicateurs testés, un programme de commande détermine, par exemple, si le réseau est saturé (Cond042) ou si le réseau a encore une partie de bande passante libre (Cond041). De manière non limitative, ces tests concernent tout ou une partie du réseau dont les paramètres sont remontés vers le dispositif (OMC1) de gestion des communications. L'état saturé ou avec une partie de sa bande passante libre, concerne par exemple, le réseau analysé dans son ensemble, les points isolés dans le réseau associés à des phénomènes particuliers, n'étant par exemple, pas pris en compte.

Si (Cond041) une partie de la bande passante n'est pas exploitée, le module de commande exécute, par exemple, une étape (Etp05) d'analyse des ressources disponibles. Cette étape (Etp05) comprend, par exemple, un calcul sur un ou plusieurs indicateurs, déterminant si la bande passante non exploitée encore disponible, permet (Cond051) une augmentation du débit accordé aux utilisateurs ayant des offres du type remplissage ou si (Cond052) la marge de bande passante disponible est négligeable ou représente juste une marge de sécurité pour garantir le bon fonctionnement.

Dans le cas (Cond052) où la marge est négligeable ou correspond à une marge fonctionnelle, le réseau étant parfaitement exploité, le réglage du débit du port dédié aux offres de remplissage dans la passerelle (GGSN1) d'accès à Internet reste inchangé, la commande est par exemple envoyée à l'identique ou aucune commande de réglage du débit de ce port n'est transmise à la passerelle. De manière non limitative, un saut est, par exemple directement réalisé à l'étape (Etp01) de collecte des données représentatives des paramètres du réseau. Le module (PRG_COM) de commande se place en attente de nouveaux tests des indicateurs à réaliser et le module (PRG_STK) de collecte et de stockage se place en attente de données à collecter.

Le programme de commande peut aussi envoyer (Etp07) une commande de maintien de son état, à la passerelle (GGSN1) cette commande étant envoyée par un port (B3) de communication, vers la passerelle. Après l'envoi (Cond07) de la commande de maintien de l'état de la passerelle, un saut est par exemple ensuite réalisé à l'étape (Etp01) de réception des données représentatives des paramètres du réseau.

Dans le cas (Cond051) où l'étape (Etp05) d'analyse des ressources disponibles a pour résultat qu'une partie de la bande passante non exploitée est utilisable pour des communications supplémentaires, le module de commande (PRG_COM) envoie par exemple un message de commande d'une augmentation de la capacité de transfert du port (APN1) dédié aux offres de remplissage dans la passerelle. Le message de commande est par exemple, envoyé par le port (B3) de communication du dispositif de gestion, via une ligne (LG2) de communication. Après l'envoi (Cond06) de cette commande, un saut à l'étape (Etp01) de collecte des données est par exemple réalisé.

Dans le cas où l'étape (Etp04) de tests des indicateurs a pour résultat une saturation du réseau (Cond042), le module (PRG_COM) de commande exécute, par exemple une étape (Etp08) de détermination du type de saturation du réseau. Cette étape (Etp08) comprend, par exemple, une évaluation du volume des communications correspondant à des offres de remplissage, selon les paramètres collectés ou les indicateurs réglés.

L'évaluation de l'exploitation par les offres de remplissage, permet par exemple, en cas de saturation du réseau, de commander une diminution de la capacité de transfert du port (APN1) dédié aux offres de remplissage, correspondant à une exploitation excessive par les utilisateurs ayant une offre dite « best effort ». Ainsi la bande passante allouée pour ces offres de remplissage peut être ajustée en fonction de la disponibilité du réseau.

En cas de détection d'une saturation par les offres de remplissage (Cond081), une étape (Etp09) de commande d'une baisse du débit par le port dédié aux offres de remplissage, est par exemple exécutée par le module de commande. Un message de commande d'une baisse du débit sur ce port, est par exemple envoyé à la passerelle (GGSN1), via une ou plusieurs lignes (LG2) de communication. Après l'envoi (Cond09) de ce message, un saut à l'étape (Etp01) de collecte des paramètres est par exemple réalisé.

D'autre part, en cas de saturation du réseau, l'évaluation (Etp08) de l'exploitation par les offres de remplissage, permet aussi de déterminer si les ressources matérielles sont suffisantes pour répondre à l'offre proposée aux clients de façon permanente. Les données transmises sont par exemple représentatives d'un nombre déterminé d'échecs de connexion pour des offres permanentes, ce nombre étant par exemple supérieur au nombre de connexions autorisées pour des connexions correspondant aux offres de remplissage, c'est-à-dire que le nombre de connexions fournies pour des offres de remplissage est négligeable par rapport aux différentes demandes de connexion correspondant à des offres permanentes. Dans ce cas (Cond082), le dispositif de gestion peut déterminer que les ressources matérielles sont manquantes pour pouvoir établir l'ensemble des connexions demandées, sans tenir compte ou en décomptant les ressources allouées aux offres de remplissage. Une étape suivante (Etp10) de signification d'un manque de ressources matérielles est, par exemple exécutée par le module de commande. Un message de notification de ressources matérielles manquantes est par exemple envoyé vers un dispositif d'évaluation des ressources matérielles comme par exemple, un autre dispositif de gestion ou vers un autre module de gestion des communications. De manière non limitative, la détection d'un manque de ressources matérielles entraîne l'envoi d'un message de commande de coupure du port (APN1) dédié aux offres de remplissage, vers la passerelle (GGSN1). Après l'envoi (Cond10) du message de notification et éventuellement de la commande de coupure du port (APN1) dédié aux offres de remplissage, un saut est par exemple réalisé, à l'étape (Etp01) de collecte des paramètres du réseau.

L'étape (Etp08) d'évaluation de l'exploitation du réseau comprend une évaluation de la bande passante utilisée par des communications relatives aux offres de remplissage. De manière non limitative, ces communications sont identifiées par l'adresse du port de la passerelle dédié aux offres de remplissage. Un message adressé à ce port dédié, est alors identifié, cette adresse étant par exemple intégrée au paramètre représentatif des ressources occupées par ce message.

De manière non limitative, les paramètres peuvent aussi comprendre des données représentatives des caractéristiques d'accès au service comme par exemple le débit maximum autorisé ou une classe de priorité associée à chaque utilisateur. Ces paramètres sont par exemple stockés, dans le dispositif de gestion, dans un champ de la base (BD1) de données en relation avec des données représentatives du débit de la communication ou des ressources occupées par la communication. De cette façon le module (PRG_MAN), peut déterminer à quel type d'abonnement, par exemple pour accéder à Internet, l'utilisateur a souscrit.

De manière non limitative, une étape (Etp06, Etp09, Etp10) de commande du réglage du débit du port dédié aux offres de remplissage dans la passerelle d'accès à Internet, est suivie d'une étape d'activation d'une fonction de priorité selon la nature de la communication. La fonction de priorité en fonction de la nature des communications permet notamment d'organiser les communications selon des critères de priorité, à l'intérieur de l'ensemble des communications relatives aux offres de remplissage. Plusieurs degrés de priorité sont ainsi réalisés. Ainsi une fois qu'une partie de la bande passante a été allouée aux offres de remplissage, une seconde gestion des communications est réalisée à l'intérieur de ce flux de données. La fonction de priorité favorise par exemple, des communications correspondant à la navigation interactive dite « web browsing », par rapport à des opérations dites de « background » correspondant par exemple aux téléchargements.

Selon un exemple non limitatif de réalisation, la passerelle (GGSN1) comprend plusieurs ports commandés selon des priorités différentes. Un premier port (APN2) correspond par exemple à des offres de remplissage pour les applications de navigation interactive en ligne. Un deuxième port est par exemple réservé aux communications d'arrière-plan correspondant, par exemple aux téléchargements. Un troisième port correspond, par exemple, aux accès Internet les plus prioritaires. Le premier port sera par exemple favorisé par rapport au deuxième, pour répondre à une logique de fonctionnement.

Les priorités entre plusieurs ports d'accès à Internet peuvent aussi être gérées en fonction des abonnements des utilisateurs, selon la base (HLR1) de données de gestion des communications. Ainsi différentes offres de services peuvent être proposées aux utilisateurs.

De manière non limitative, les communications associées à des offres correspondantes, par recoupement avec la base (HLR1) de données de gestion des communications, sont utilisées pour détecter d'éventuelles fraudes ou d'éventuelles erreurs dans les communications. De plus le dispositif (OMC1) de gestion des communications peut être associé à un espace d'archivage des communications permettant par exemple, de retrouver l'historique des communications, par exemple pour des études statistiques.

## Revendications

1. Procédé de gestion des communications de terminaux mobiles dans un premier réseau de communication par ondes radiofréquences géré par un opérateur et un second réseau (WEB1), reliés entre eux par une passerelle (GGSN1) comprenant une pluralité de ports (APN1, APN2, APN3) de communication entre les premier et second réseaux, le premier réseau étant équipé d'organes de contrôle produisant :
- des paramètres relatifs aux communications établies avec les terminaux mobiles, comprenant chacun au moins un identifiant de l'utilisateur du terminal mobile en communication et un identifiant du type de communication, ou
- des paramètres relatifs aux échecs de connexions, comprenant chacun au moins un identifiant du type de connexion ayant échoué et un identifiant du type d'utilisateur du terminal mobile concerné, ou
- des paramètres relatifs à l'occupation des ressources des différents éléments du premier réseau, et notamment de chacun des ports de la passerelle entre le premier et le second réseau,
**caractérisé en ce qu'**il comprend au moins :
- une étape (Etp01) de collecte des paramètres produits par les organes de contrôle,
- une étape (Etp03) de traitement des paramètres collectés pour régler au moins un indicateur de saturation,
- une étape (Etp04) de test dudit indicateur, résultant d'une commande de capacité de transmission d'au moins un port dédié aux accès de type offre grand public, parmi lesdits ports de la passerelle.

2. Procédé de gestion des communications selon la revendication 1, **caractérisé en ce que** l'étape (Etp04) de test indiquant une saturation du premier réseau, est suivie d'une étape (Etp08) détermination du type de saturation comprenant une analyse des paramètres collectés ou des indicateurs réglés et comprenant une évaluation des communications du type accès au second réseau par les utilisateurs de terminaux bénéficiant d'offres grand public.

3. Procédé de gestion des communications selon la revendication 2, **caractérisé en ce que** l'étape (Etp08) de détermination du type de saturation comprend un accès à une base de données comprenant au moins un type d'offre souscrite associé à chaque identifiant d'utilisateur, de façon à faire correspondre chaque communication et chaque échec de connexion, avec le type d'offre souscrite par l'utilisateur.

4. Procédé de gestion des communications selon la revendication 2, **caractérisé en ce que** durant l'étape (Etp08) de détermination du type de saturation, les communications, ou respectivement les échecs de connexion, du type accès au second réseau par des utilisateurs de terminaux bénéficiant d'offres grand public, sont déterminées par leur identifiant du type de communication, ou respectivement d'échec de connexion, qui comprend l'adresse du port dédié aux accès de type offre grand public.

5. Procédé de gestion des communications selon l'une des revendications 2 à 4, **caractérisé en ce que** l'étape (Etp08) de détermination du type de saturation résultant d'une saturation par des communications du type accès au second réseau par des utilisateurs bénéficiant d'une offre grand public, aux dépens d'autres types de connexions, est suivie d'une étape (Etp09) de commande de réduction de la capacité de transmission du port dédié aux accès de type offre grand public vers le second réseau et
l'étape (Etp08) de détermination du type de saturation ne résultant pas d'une saturation par des communications du type accès au second réseau par des utilisateurs bénéficiant d'une offre grand public, est suivie d'une étape (Etp10) de signification de ressources matérielles insuffisantes dans le premier réseau, à un dispositif d'évaluation des ressources matérielles.

6. Procédé de gestion des communications selon l'une des revendications 1 à 5, **caractérisé en ce que** l'étape (Etp04) de test indiquant une non-saturation du premier réseau, est suivie d'une étape (Etp06) de commande d'augmentation de la capacité de transmission du port dédié aux accès de type offre grand public vers le second réseau.

7. Procédé de gestion des communications selon l'une des revendications 1 à 6, **caractérisé en ce qu'**il comprend une étape d'activation d'une fonction de gestion des priorités sur le port dédié aux accès de type offre grand public, donnant la priorité aux communications de type navigation interactive en ligne par rapport aux communications du type téléchargement.

8. Système de communication comprenant des terminaux mobiles dans un premier réseau de communication par ondes radiofréquences géré par un opérateur, le premier réseau communiquant avec un second réseau (WEB1) par une passerelle (GGSN1) équipée d'une pluralité de ports (APN1, APN2, APN3) de communication entre les premier et second réseaux, le premier réseau étant équipé d'organes de contrôle produisant :
- des paramètres relatifs aux communications établies avec les terminaux mobiles, comprenant chacun au moins un identifiant de l'utilisateur du terminal mobile en communication et un identifiant du type de communication, ou
- des paramètres relatifs aux échecs de connexions, comprenant chacun au moins un identifiant du type de connexion ayant échouée et un identifiant de l'utilisateur du terminal mobile concerné, ou
- des paramètres relatifs à l'occupation dès ressources des différents éléments du premier réseau, et notamment de chacun des ports de la passerelle entre le premier et le second réseau,
**caractérisé en ce qu'**il comprend au moins une ligne (LG2) de commande d'un port (APN1) de la passerelle pilotée par un dispositif (OMC1) de gestion des éléments de réseau, le port (APN1) commande étant dédié aux accès de type offre grand public,
le dispositif de commande comprenant :
- un module (PRGSTK) de collecte des paramètres,
- un module (PRG_MAN) de traitement des paramètres collectés, réglant au moins un indicateur de saturation,
- un module (PRG_COM) de commande, réglant la capacité de transfert du port (APN1) dédié aux accès de type offre grand public, en fonction de l'indicateur de saturation, de façon à ne pas encombrer le premier réseau ou de façon à exploiter la bande passante disponible du premier réseau.

9. Système de communication selon la revendication 8, **caractérisé en ce que** le second réseau (WEB1) est le réseau Internet, les utilisateurs grand public établissant des communications Internet étant identifiables dans le premier réseau au travers d'un marquage particulier des en-têtes encapsulant les informations transférées par les utilisateurs.

10. Système de communication selon la revendication 8 ou 9, **caractérisé en ce que**, la passerelle du type GGSN (Gateway GPRS Support Node), ou encore constituée d'un serveur indépendant qui sera située entre le GGSN du premier réseau et le second réseau, active une fonction de priorité sur son port (APN1) dédié aux accès de type offre grand public, donnant la priorité aux communications de type navigation interactive en ligne par rapport aux communications du type téléchargement.

11. Système de communication selon l'une des revendications 8 à 10, **caractérisé en ce que** les organes de contrôle sont intégrés à des noeuds (BT1, BT2, CTR1, CTR2) de communication du premier réseau ou sont réalisés par des sondes de contrôle intégrées dans le premier réseau.

## Patentansprüche

1. Ein Verfahren zur Kommunikationsverwaltung von mobilen Endgeräten in einem ersten Radiofrequenzwellen-Kommunikationsnetzwerk, verwaltet durch einen Betreiber, und einem zweiten Netzwerk (WEB1), die über ein Gateway (GGSN1), welches eine Vielzahl an Kommunikationsports (APN1, APN2, APN3) zwischen dem ersten und dem zweiten Netzwerk umfasst, miteinander verbunden sind, wobei das erste Netzwerk mit Steuerelementen ausgestattet ist, die folgendes erzeugen:
Parameter, die die mit mobilen Endgeräten aufgebaute Kommunikation betreffen, wobei jeder mindestens eine Benutzerkennung des kommunizierenden Endgerätes umfasst, sowie eine Kennung der Kommunikationsart, oder
Parameter, die die fehlgeschlagenen Verbindungen betreffen, wobei jeder mindestens eine Kennung der fehlgeschlagenen Verbindungsart umfasst, sowie eine Kennung der Art des Benutzers des betroffenen mobilen Endgerätes, oder
Parameter betreffend die Belegung der Ressourcen der verschiedenen Elemente des ersten Netzwerkes, und insbesondere jedes Ports des Gateways zwischen dem ersten und dem zweiten Netzwerk,
**dadurch gekennzeichnet, dass** es mindestens umfasst:
einen Schritt (Etp01), um die durch die Steuerelemente erzeugten Parameter zu sammeln,
einen Schritt (Etp03), um die gesammelten Parameter zu verarbeiten, um mindestens einen Sättigungsindikator einzustellen,
einen Schritt (Etp04), um besagten Indikator zu testen, der sich aus einem Übertragungskapazitätsbefehls des mindestens einem Port ergibt, der für Zugangsangebote der allgemein öffentlichen Art bestimmt ist, unter besagten Gateway-Ports.

2. Verfahren zur Kommunikationsverwaltung gemäß Anspruch 1,
**dadurch gekennzeichnet, dass**
der Testschritt (Etp04), der eine Sättigung des ersten Netzwerkes anzeigt, gefolgt wird von einem Schritt (Etp08) zur Bestimmung der Sättigungsart umfassend eine Analyse der gesammelten Parameter oder eingestellten Indikatoren und umfassend eine Evaluierung der Kommunikation der Zugangsart zum zweiten Netzwerk von den Benutzern der Endgeräte, die an den allgemein öffentlichen Angeboten teilnehmen.

3. Verfahren zur Kommunikationsverwaltung gemäß Anspruch 2,
**dadurch gekennzeichnet, dass**
der Schritt (Etp08) zur Bestimmung der Sättigungsart einen Zugang zu einer Datenbank umfasst, die mindestens eine Art des Teilnahmeangebots beinhaltet, die mit jeder Benutzerkennung verbunden ist, um jede Kommunikation und jede fehlgeschlagene Verbindung mit der an der von dem Benutzer teilgenommenen Angebotsart abzugleichen.

4. Verfahren zur Kommunikationsverwaltung gemäß Anspruch 2,
**dadurch gekennzeichnet, dass**
während des Schrittes (Etp08) zur Bestimmung der Sättigungsart die Kommunikation, bzw. die fehlgeschlagenen Verbindungen, des Zugangstyps zu dem zweiten Netzwerk von den Benutzern der Endgeräte, die von den allgemein öffentlichen Angeboten profitieren, anhand ihrer Kennung der Kommunikationsart, bzw. der fehlgeschlagenen Verbindung, bestimmt werden, die die Adresse des Ports beinhaltet, der für die Zugangsangebote der allgemein öffentlichen Art bestimmt ist.

5. Verfahren zur Kommunikationsverwaltung gemäß einem der Ansprüche 2 - 4,
**dadurch gekennzeichnet, dass**
auf den Schritt (Etp08) zur Bestimmung der Sättigungsart, die sich aus einer Sättigung durch die Kommunikation des Zugangstyps zu dem zweiten Netzwerk durch die Benutzer, die von einem allgemein öffentlichen Angebot profitieren, zum Nachteil von anderen Verbindungsarten ergibt, ein Schritt (Etp09) folgt, in dem eine Reduzierung der Übertragungskapazität des Ports, in Richtung des zweiten Netzwerkes, angewiesen wird, der für die Zugangsangebote der allgemein öffentlichen Art bestimmt ist, und auf
den Schritt (Etp08) zur Bestimmung der Sättigungsart, die sich nicht aus einer Sättigung durch die Kommunikation des Zugangstyps zu dem zweiten Netzwerk durch Benutzer, die von einem allgemein öffentlichen Angebot profitieren, ergibt, ein Schritt (Ept10) folgt, in dem nicht ausreichende materielle Ressourcen in dem ersten Netzwerk einer Einrichtung zur Evaluierung materieller Ressourcen gemeldet wird.

6. Verfahren zur Kommunikationsverwaltung gemäß einem der Ansprüche 1 bis 5,
**dadurch gekennzeichnet, dass**
auf den Testschritt (Etp04), der eine nicht-Sättigung des ersten Netzwerks zeigt, ein Befehlsschritt (Etp06) folgt, in dem eine Erhöhung der Übertragungskapazität des
Ports, der für die Zugangsangebote der allgemein öffentlichen Art bestimmt ist, angewiesen wird, in Richtung des zweiten Netzwerkes.

7. Verfahren zur Kommunikationsverwaltung gemäß einem der Ansprüche 1 bis 6,
**dadurch gekennzeichnet, dass**
es einen Schritt zur Aktivierung einer Prioritätsverwaltungsfunktion an dem Port umfasst, der für die Zugangsangebote der allgemeinen öffentlichen Art bestimmt ist, wobei der Kommunikationsart des Web-Browsing gegenüber der Kommunikationsart des Herunterladens Priorität eingeräumt wird.

8. Kommunikationssystem, das mobile Endgeräte in einem ersten Kommunikationsnetzwerk unter Benutzung von Radiofrequenzwellen, welches von einem Betreiber verwaltet wird, umfasst, wobei das erste Netzwerk mit einem zweiten Netzwerk (WEB1) über ein Gateway (GGSN1) kommuniziert, welches mit einer Vielzahl an Kommunikationsports (APN1, APN2, APN3) zwischen dem ersten und dem zweiten Netzwerk ausgestattet ist, wobei das erste Netzwerk mit Steuerelementen ausgestattet ist, welche folgendes erzeugen:
Parameter, die die mit mobilen Endgeräten aufgebaute Kommunikation betreffen, wobei jeder mindestens eine Benutzerkennung des kommunizierenden Endgerätes umfasst, sowie eine Kennung der Kommunikationsart, oder
Parameter, die die fehlgeschlagenen Verbindungen betreffen, wobei jeder mindestens eine Kennung der fehlgeschlagenen Verbindungsart umfasst, sowie eine Kennung der Art des Benutzers des betroffenen mobilen Endgerätes, oder
Parameter betreffend die Belegung der Ressourcen der verschiedenen Elemente des ersten Netzwerkes, und insbesondere jedes Ports des Gateways zwischen dem ersten und dem zweiten Netzwerk,
**dadurch gekennzeichnet, dass** es mindestens eine Befehlsleitung (LG2), die einen Port (APN1) des Gateways steuert, gesteuert über eine
Verwaltungseinrichtung (OMC1), das Elemente des Netzwerkes verwaltet, wobei der befehligte Port für Zugangsangebote der allgemein öffentlichen Art bestimmt ist, wobei die Befehlseinrichtung umfasst:
ein Modul (PRGSTK) zum Sammeln von Parametern,
ein Modul (PRG_MAN) zum Verarbeiten der gesammelten Parameter, wobei mindestens ein Sättigungsindikator eingestellt wird,
ein Befehlsmodul (PRG_COM), das die Transferkapazität des Ports (APN1), der für Zugangsangebote der allgemeinen öffentlichen Art bestimmt ist, in Abhängigkeit von dem Saturationsindikator einstellt, so dass das erste Netzwerk nicht überlastet wird oder so dass die verfügbare Bandbreite des ersten Netzwerkes in vollem Umfang genutzt wird.

9. Kommunikationssystem gemäß Anspruch 8,
**dadurch gekennzeichnet, dass**
das zweite Netzwerk (WEB1) das Internet-Netzwerk ist, wobei diejenigen allgemein öffentlichen Benutzer, die eine Internetkommunikation aufbauen, in dem ersten Netzwerk über spezielle Kennzeichnung der Header, die von den Benutzern übertragene Daten einkapseln, identifizierbar sind.

10. Kommunikationssystem gemäß Anspruch 8 oder 9,
**dadurch gekennzeichnet, dass**
das Gateway des Typs GGSN (Gateway GPRS Support Node), oder bestehend aus einem unabhängigen Server, der zwischen dem GGSN des ersten Netzwerkes und dem zweiten Netzwerk angeordnet ist, eine Prioritätsfunktion an seinem Port (APN1) aktiviert, der für die Zugangsangebote der allgemein öffentlichen Art bestimmt ist, wobei den Kommunikationsarten des Web-Browsing gegenüber Kommunikationsarten des Herunterladens Priorität eingeräumt wird.

11. Kommunikationssystem gemäß einem der Ansprüche 8 bis 10,
**dadurch gekennzeichnet, dass**
die Steuereinheiten in Kommunikationsknoten (BT1, BT2, CTR1, CTR2) des ersten Netzwerkes integriert sind, oder als in das erste Netzwerk integrierte Steuersonden ausgebildet sind.

## Claims

1. Method for management of the communications of mobile terminals in a first communications network using radio frequency waves managed by an operator and a second network (WEB1), connected to one another by a gateway (GGSN1) comprising a plurality of ports (APN1, APN2, APN3) for communication between the first and second networks, the first network being equipped with control devices producing:
- parameters relating to the communications established with the mobile terminals, each comprising at least an identifier of the user of the mobile terminal in communication and an identifier of the type of communication, or
- parameters relating to the connection failures, each comprising at least an identifier of the type of failed connection and an identifier of the type of user of the mobile terminal concerned, or
- parameters relating to the occupation of the resources of the different elements of the first network, and notably of each of the ports of the gateway between the first and the second network,
**characterised in that** it comprises at least:
- a step (Etp01) for collection of the parameters produced by the control devices,
- a step (Etp03) for processing of the collected parameters to set at least one saturation indicator,
- a step (Etp04) for testing of the said indicator, resulting from an order for transmission capacity from at least one port dedicated to access of the type involving general public offerings, among the said ports of the gateway.

2. Method for management of the communications according to claim 1, **characterised in that** the step (Etp04) for testing indicating saturation of the first network, is followed by a step (Etp08) for determination of the type of saturation comprising an analysis of the collected parameters or set indicators and comprising an evaluation of the communications of the type involving access to the second network by the users of terminals benefitting from general public offerings.

3. Method for management of the communications according to claim 2, **characterised in that** the step (Etp08) for determination of the type of saturation comprises access to a database comprising at least one type of subscription offering associated with each user identifier, so as to match each communication and each connection failure with the type of subscription offering signed up to by the user.

4. Method for management of the communications according to claim 2, **characterised in that** during the step (Etp08) for determination of the type of saturation, the communications or respectively the connection failures, of the type involving access to the second network by users of terminals benefitting from general public offerings, are determined by their identifier of
the type of communication, or respectively connection failure, which comprises the address of the port dedicated to access of the type involving general public offerings.

5. Method for management of the communications according to one of claims 2 to 4, **characterised in that** the step (Etp08) for determination of the type of saturation resulting from saturation by communications of the type involving access to the second network by users benefitting from a general public offering, at the expense of other types of connections, is followed by a step (Etp09) for ordering a reduction in the transmission capacity of the port dedicated to access of the type involving general public offerings to the second network and
the step (Etp08) for determination of the type of saturation not resulting from saturation by communications of the type involving access to the second network by users benefitting from a general public offering, is followed by a step (Etp10) for indication of insufficient material resources in the first network, to a device for evaluation of the material resources.

6. Method for management of the communications according to one of claims 1 to 5, **characterised in that** the step (Etp04) for testing indicating non-saturation of the first network is followed by a step (Etp06) for ordering an increase in the transmission capacity of the port dedicated to access of the type involving general public offerings to the second network.

7. Method for management of the communications according to one of claims 1 to 6, **characterised in that** it comprises a step for activation of a function for management of the priorities on the port dedicated to access of the type involving general public offerings, giving priority to communications of the type involving online interactive browsing over communications of the type involving downloading.

8. System for communication comprising mobile terminals in a first communications network using radio frequency waves managed by an operator, the first network communicating with a second network (WEB1) by a gateway (GGSN1) equipped with a plurality of ports (APN1, APN2, APN3) for communication between the first and second networks, the first network being equipped with control devices producing:
- parameters relating to the communications established with the mobile terminals, each comprising at least an identifier of the user of the mobile terminal in communication and an identifier of the type of communication, or
- parameters relating to the connection failures, each comprising at least an identifier of the type of failed connection and an identifier of the user of the mobile terminal concerned, or
- parameters relating to the occupation of the resources of the different elements of the first network, and notably of each of the ports of the gateway between the first and the second network,
**characterised in that** it comprises at least one line (LG2) for control of a port (APN1) of the gateway piloted by a device (OMC1) for management of the network elements, the port (APN1) being controlled being dedicated to access of the type involving general public offerings,
the control device comprising:
- a module (PRGSTK) for collection of the parameters,
- a module (PRG_MAN) for processing of the collected parameters, setting at least one saturation indicator,
- a module (PRG_COM) for control, setting the transfer capacity of the port (APN1) dedicated to access of the type involving general public offerings, as a function of the saturation indicator, so as not to overload the first network or so as to exploit the available band width of the first network.

9. System for communication according to claim 8, **characterised in that** the second network (WEB1) is the internet network, the general public users establishing internet communications being identifiable in the first network by means of individual marking of the headers encapsulating the information transferred by the users.

10. System for communication according to claim 8 or 9, **characterised in that**, the gateway being of the GGSN (Gateway GPRS Support Node) type, or constituted by an independent server which will be situated between the GGSN of the first network and the second network, activates a priority function on its port (APN1) dedicated to access of the type involving general public offerings, giving priority to communications of the type involving online interactive browsing over communications of the type involving downloading.

11. System for communication according to one of claims 8 to 10, **characterised in that** the control devices are incorporated in communication nodes (BT1, BT2, CTR1, CTR2) of the first network or are formed by control sensors incorporated in the first network.
